# EUROPÄISCHE PATENTANMELDUNG

(11) **EP 0 740 402 A1**
(43) Veröffentlichungstag der Anmeldung: **30.10.1996**
(21) Anmeldenummer: 96810231.9
(22) Anmeldetag: 12.04.1996
(51) Int. Cl.: H02K 9/00, H02K 9/18

(54) **Vertikalachsige elektrische Wasserkraftmaschine**

(30) Priorität: 26.04.1995 DE 19515260
(71) Anmelder: ABB Management AG, CH-5401 Baden (CH)
(72) Erfinder: Schwanda, Josef, 5242 Lupfig (CH)

(57) **Zusammenfassung**

Die vertikalachsige elektrische Wasserkraftmaschine weist einen mit einer Nabe (3) versehenen Rotorstern auf, an welchem am Aussenumfang ein Rotorkranz (7) angeordnet ist. Dieser trägt aus Polblechen geschichtete Rotorpole (14) und Polwicklungen (15). Der Statorblechkörper (18) ist gleichfalls aus Blechen geschichtet und ist mit Nuten am Innenumfang zur Aufnahme einer Statorwicklung (28) versehen, die an beiden Blechkörperstirnseiten Statorwickelköpfe (41,42) und Wicklungsverbindungen aufweist. Sowohl Rotorkranz (7) als auch Statorblechkörper (18) sind mit radial verlaufenden Kühlschlitzen (9,19), durch welche Kühlluft von der Nabe durch besagte Schlitze (9) im Rotorkranz, die Distanzen (16) zwischen den Polen, den Luftspalt (17) und die Schlitze (19) im Statorblechkörper (18) in einen diesen umgebenden mit Kühlern (23) ausgestatteten Ringraum und von dort aus wieder zur Nabe führbar ist. Der Rotor wirkt dabei als Förder- und Druckerzeugungsmittel für die Kühlluft.

Zur Abschottung des Maschinenluftspaltes (17) gegenüber dem Wickelkopfraum (39,40) sind an den Rotorpole (14) an beiden Stirnseiten Dichtplatten (24) befestigt, die in den Maschinenluftspalt (17) bis nahe an die Statorbohrung heranreichen und Umfangsrichtung gesehen allenfalls unter Belassung von kleinen Spalten (34) dicht an dicht angeordnet. Sie bilden auf diese Weise eine Ringdichtung. Damit liegen der Wickelkopf (41,42) und die Wicklungsverbindungen im Frischluftstrom hinter den Kühlern (23) und werden optimal gekühlt.

## Beschreibung

### TECHNISCHES GEBIET

Die Erfindung bezieht sich auf eine vertikalachsige elektrische Wasserkraftmaschine mit einem mit einer Nabe versehenen Rotorstern, an welchem am Aussenumfang ein Rotorkranz angeordnet ist, der aus Polblechen geschichtete Rotorpole und Polspulen trägt, einem den Rotor umgebenden und vom diesem durch einen Luftspalt getrennten Stator, der einen aus Blechen geschichteten Statorblechkörper mit Nuten am Innenumfang zur Aufnahme einer Statorwicklung aufweist, welche Statorwicklung an beiden Blechkörperstirnseiten Statorwickelköpfe und Wicklungsverbindungen aufweist, wobei sowohl Rotorkranz als auch Statorblechkörper radial verlaufende Kühlschlitze aufweist, durch welche Kühlluft von der Nabe durch besagte Schlitze im Rotorkranz, die Distanzen zwischen den Polen, den Luftspalt und die Schlitze im Statorblechkörper in einen diesen umgebenden mit Kühlern ausgestatteten Ringraum und von dort aus wieder zur Nabe führbar ist, wobei als Förder- und Druckerzeugungsmittel für die Kühlluft der Rotor selbt wirkt.

Die Erfindung nimmt dabei Bezug auf einen Stand der Technik, wie er sich beispielsweise aus der Firmenschrift derBBC Brown Boveri & Company, Ltd. CH-5401 Baden/Switzerland "Karakaya, a Hydrolelectric Power Plant in Turkey", Publication No. CH-T 130 213 E, undatiert, insbesondere Fig.6 auf Seite 6, ergibt.

### TECHNOLOGISCHER HINTERGRUND UND STAND DER TECHNIK

Bei vertikalachsigen Wasserkraftmaschinen der eingangs genannten Gattung tritt die Kühlluft im Bereich der Rotornabe in den Rotor ein. Von dort aus gelangt sie durch die Distanzen zwischen den Schrägarmen zum Rotorkranz. Dieser ist mit radialen Schlitzen versehen, die mit den Pollücken in freier Verbindung stehen. Die Schrägarme wirken dabei als Ventilator, die Schlitze im Rotorkranz und die Pollücken als Druckerzeuger. Durch diese strömt die Kühlluft in den Maschinenluftspalt und von dort aus durch ebenfalls radial verlaufende Schlitze im Statorblechkörper in einen Ringraum, der den Statorblechkörper umgibt und aussen durch die Fundamentgrube oder eine Stahlkonstruktion abgeschlossen ist. In diesem Ringraum sind regelmässig die Luft-Wasserkühler angeordnet. Hinter diesen Kühlern wird die Kühlluft nach Umlenkung zurück zur Rotornabe geführt, und zwar durch freie Räume oberhalb und unterhalb des Rotorkranzes.

Zur Kühlung des Statorwickelkopfes wird ein Teilstrom der durch den Rotorkranz strömenden Luft an dessen Stirnseiten ausgeleitet, durchströmt den Wickelkopf und die Wicklungsverbindungen und wird dann ebenfalls den besagten Luft-Wasserkühlern zugeführt. Zu diesem Zweck ist der Wickelkopfraum und ein Teil der Stirnseiten des Rotorkranzes von einer grossräumigen am Statorblechkörper befestigten Verschalung abgedeckt. Die Verschaltung weist im rotorseitigen Abschnitt eine rotierende Dichtung auf, die mit einem Dichtelement an den Strinseiten des Rotors zusammenwirkt. Auf diese Weise gelangt der besagte Teilluftstrom zu den Luft-Wasserkühlern und vermischt sich nicht mit der gekühlten zur Nabe strömenden Kaltluft.

Neben dem kontruktiven Aufwand für die Verschalung und die rotierende Dichtung ist diese Ausführung insofern nachteilig, als zur Kühlung des Wickelkopfes und der Wicklungsverbindungen Luft verwendet wird, die sich auf ihrem Weg durch die Kühlschlitze im Rotorkranz und die Pollücken bereits erwärmt hat.

### KURZE DARSTELLUNG DER ERFINDUNG

Ausgehend vom Bekannten liegt der Erfindung die Aufgabe zugrunde, bei einer vertiaklachsigen elektrischen Wasserkraftmaschine der eingangs genannten Gattung Kühlluftführung zu schaffen, die kostruktiv einfach und wirtschaftlich zu realisieren ist, und die eine optimale Kühlung der Statorwickelköpfe und Wicklungsverbindungen ermöglicht.

Diese Aufgabe wird bei einer vertikalachsigen elektrischen Wasserkraftmaschine der eingangs genannten Gattung erfindungsgemäss dadurch gelöst, dass die Rotorpole an beiden Stirnseiten Dichtplatten aus nichtmagnetischem Material aufweisen, die in den Maschinenluftspalt bis nahe an die Statorbohrung heranreichen und Umfangsrichtung gesehen allenfalls unter Belassung von kleinen Spalten dicht an dicht angeordnet und auf diese Weise eine Ringdichtung bilden, welche den Maschinenluftspalt vom Wickelkopfraum trennt.

Die Anordnung einer derartigen Ringdichtung im Bereich der Maschinenstirnseiten vereinfacht die Luftführung entscheidend, weil die gesamte Kühlluftmenge ohne Umlenkung im wesentlichen radial nach aussen durch Rotor und Stator zu den Kühlern geführt wird. Ein Ausleiten eines Kühlluftteilstroms für die Wickelköpfe und die Wicklungsverbindungen im Wickelkopfraum ist entbehrlich. Letztere liegen numehr frei in dem von den Kühlern zur Rotornabe zurückströmenden frischen Kühlluft.

Die Erfindung eignet sich insbesondere für Wasserkraftmaschinen mit sogenannten endplattenlosen Polen, wie sie Gegenstand der CH-A-675 799 sind. Diese Pole sind nur aus unter sich gleichartigen und gleich dicken Polblechen aufgebaut. Neben herkömmlichen Spannelementen im achsnahen Bereich sind im achsfernen Abschnitt den gesamten Pol durchsetzende Spannbolzen mit endseitigen kombinierten Spann- und Druckverteilungselementen vorgesehen, welche Druckverteilungselemente nach aussen weisende Vorsprünge zur Abstützung der Polspulen aufweisen. Bei derartigen Polen kann nämlich eine Verlängerung und Verbreiterung der beiden äussersten Polbleche gleichtzeitig als Dichtplatte im Sinne der Erfindung dienen. Wirtschaftlicher ist es jedoch, die Dichtplatten als eigenständiges Bauteil auszubilden und sie mittels Stehbolzen an den Strinseiten der Pole zu befestigen

### KURZE BESCHREIBUNG DER ZEICHNUNG

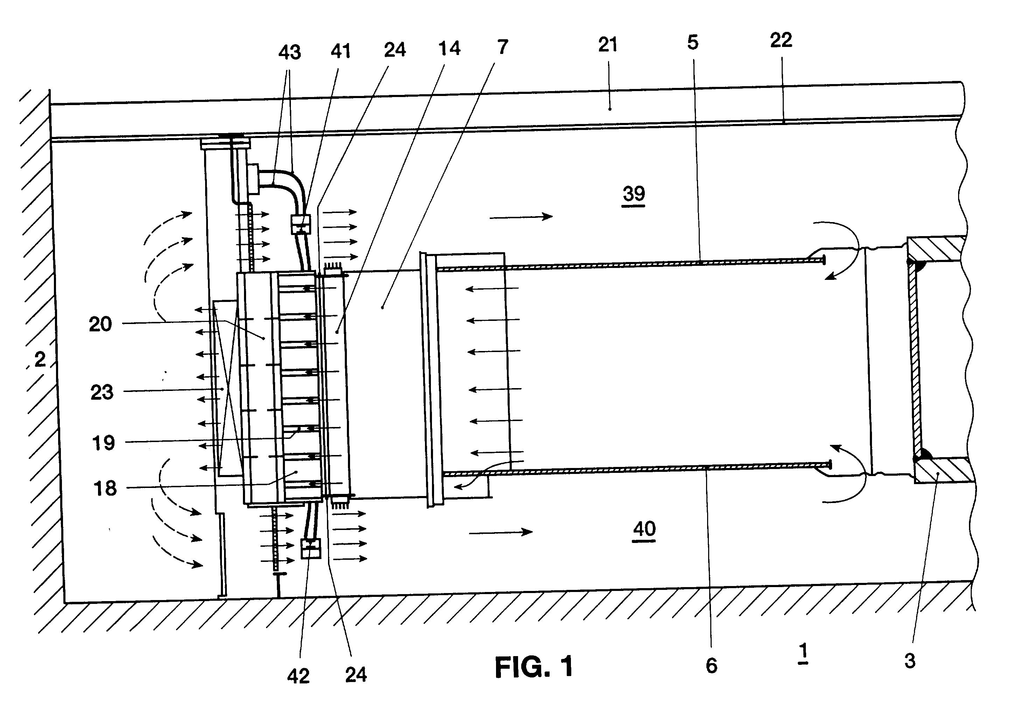

In der Zeichnung ist ein bevorzugtes Ausführungsbeispiel der Erfindung dargesstellt; dabei zeigt
- Fig.1: einen vereinfachten Längsschnitt durch eine vertikalachsige Wasserkraftmaschine;
- Fig.2: eine perspektivische Darstellung eines Ausschnitts des Rotorkranzes mit Rotorpolen der Maschine nach Fig.1;
- Fig.3: einen vereinfachten Querschnitt durch einen Teil des Rotors und Stators der Maschine nach Fig.l;
- Fig.4: eine vereinfachte Draufsicht aur die Rotorpole nach Fig.3
- Fig.5: eine vergrösserte, detailliertere Draufsicht auf die Pollücke mit eingebautem Verdrängungskörper und Pollückenabdeckung;
- Fig.6: einen Querschnitt durch eine Befestigungsstelle einer Dichtplatte am Pol.

### DETAILLIERTE BESCHREIBUNG DER ERFINDUNG

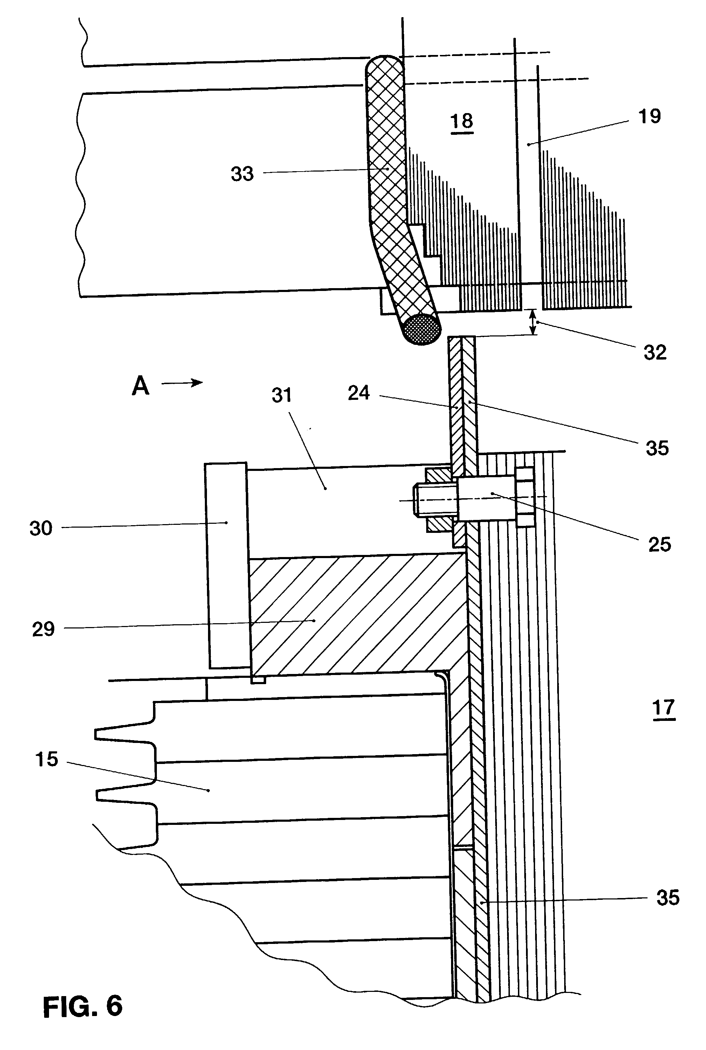

Der grundsätzliche Aufbau der in Fig.l im Schnitt dargestellten vertikalachsigen Wasserkraftmaschine entspricht im wesentlichen der Maschine nach der einleitend zitierten Firmenschrift, dort Fig.6 auf Seite 6.

Die Wasserkraftmaschine ist im Beispielsfall vollständig in einer Fundamentgrube mit Wänden 1 und Boden 2 untergebracht. Die Rotorkonstruktion umfasst eine Rotornabe 3, von welcher Schrägspeichen 4 ausgehen, die oben und unten von einem Deckring 5 bzw. 6 abgedeckt sind. Diese Bauteile bilden den Rotorstern. An seinem Aussenumfang ist ein Rotorkranz 7 angeordnet. Er besteht aus Blechsegmenten 8, die lagenweise in Umfangsrichtung versetzt aufeinandergestapelt sind. Benachbarte Blechsegmente 8 einer Lage sind dabei voneinander distanziert, so dass eine Vielzahl radial verlaufender, den Rotorkranz vollständig durchdringender Kühlschlitze 9 entsteht, durch welche Kühlluft in Pfeilrichtung radial nach aussen strömen kann. Die mechanische Verbindung zwischen den Schrägarmen 4 und dem Rotorkranz 7 erfolgt in bekannter Weise durch Leisten 10, Keile 11 und axiale Nuten 12 am Innenumfang des Rotorkranzes 7.

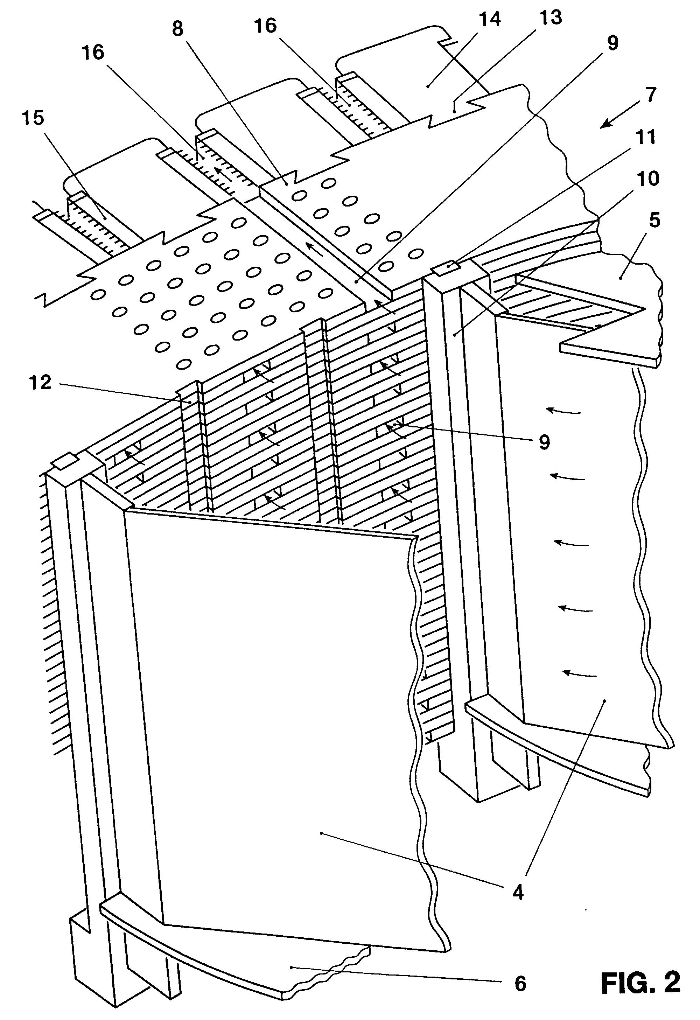

Am Aussenumgang weist der Rotorkranz 7 axial verlaufende schwalbenschwanzförmige Nuten auf zur Befestigung der mit entsprechend geformten schwalbenschwanzförmigen Polklauen 13 vesehenen Rotorpole 14 auf. Diese tragen eine Polwicklung 15. Der Aufbau der Rotorpole entspricht grundsätzlich dem endplattenlosen Pol, wie er in der eingangs genannten CH-A-675 799 beschrieben wird, und auf den hier ausdrücklich zur Vermeidung von Wiederholungen Bezug genommen wird. Wie aus Fig.2 deutlich zu erkennen ist, münden die radialen Kühlschlitze 9 im Rotorkranz 7 jeweils im Raum zwischen zwei benachbarten Rotorpolen 14, der sogenannten Pollücke 16, die wiederum mit dem Maschinenluftspalt 17 hin offen ist.

Der den Rotor umgebende Stator (Fig.l) umfasst einen aus voneinander distanzierten Teilblechkörpern aufgebauten Statorblechkörper 18, der - wie der Rotorkranz 7 - gleichfalls aus segmentierten Blechen aufgebaut ist und radial verlaufende Kühlschlitze 19 zwischen benachbarten Teilblechkörpern aufweist.

Der Statorblechkörper 18 von einer Statortragkonstruktion 20 umgeben, die sich unten auf dem Fundamentboden 1 abstützt. Oben ist die Statortragkonstruktion 20 am Lagertragstern 21 befestigt. An diesem ist ist eine die Fundamentgrube vollständig überdeckende Abdeckung 22 angeordnet, die sich bis zum (nicht eingezeichneten) Trag und Führungslager der Maschine erstreckt. Am Aussenumgang der Statortragkonstruktion 20 sind über ihren Umfang verteilt mehrere Luft-Wasserkühler 23 angeordnet.

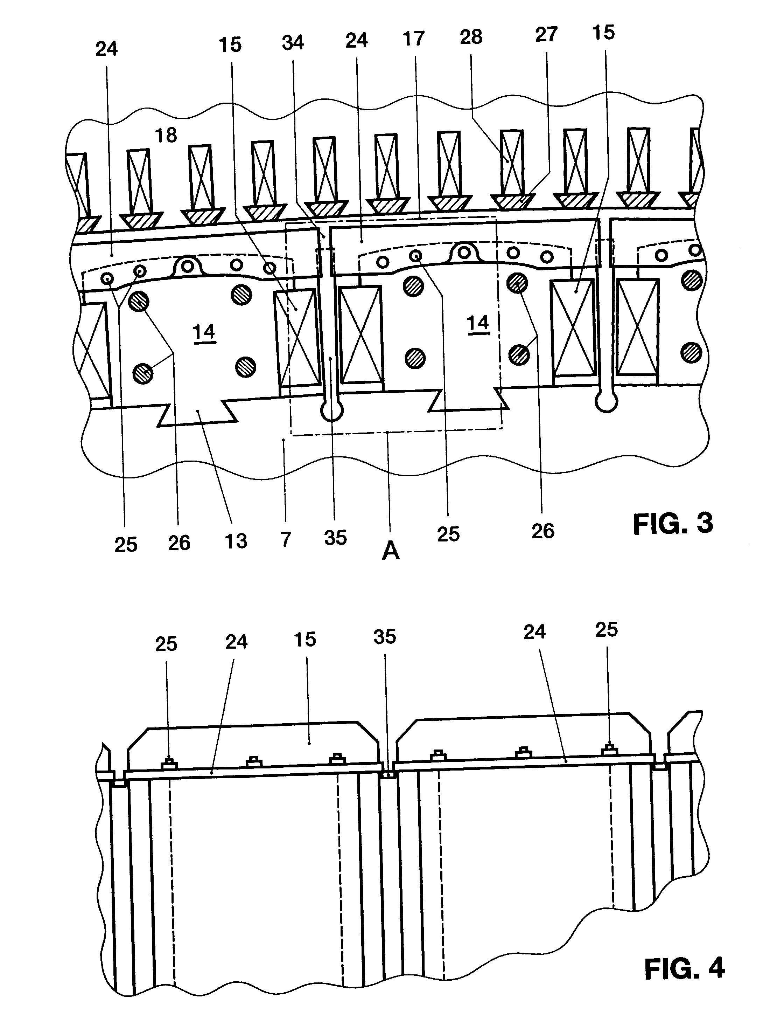

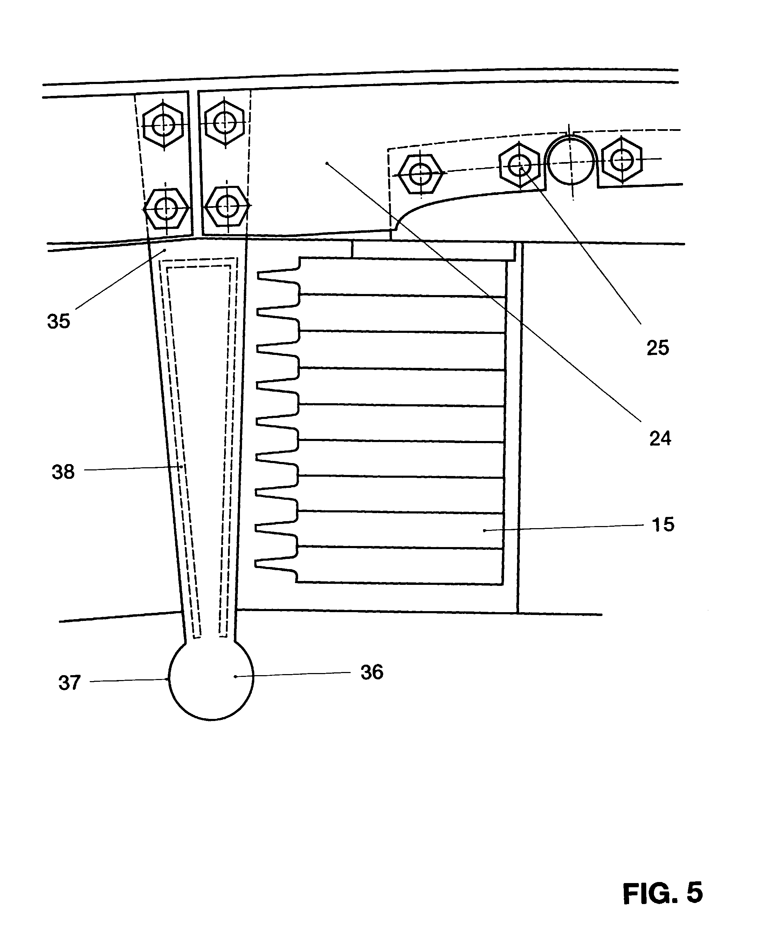

Insoweit entspricht der beschriebene Aufbau dem Stand der Technik. Um nun die erfindungsemässe Kühlluftführung zu realisieren, weisen die Rotorpole 14 an beiden Stirnseiten Dichtplatten 24 aus nichtmagnetischem Material auf, die in Fig.l lediglich angedeutet, in den Figuren 3 bis 5 detaillierter dargestellt sind. Diese Dichtplatten 24, sie bestehen z.B. aus einer Alumnium-Legierung (Anticorodal) oder aus glasfaserverstärktem Kunstoff, sind im Beispielsfall am achsfernen Abschnitt des Pols 14 unabhängig von den Spannund Abstützelementen für die Polwicklung 15 mittels Stehbolzen 25 befestigt (Fig.5 und 6). In Fig.3 sind lediglich die den Pol durchsetzenden Bolzen 26 sichtbar, und auch die in Nuten im Statorblechkörper 18 mittels Nutkeilen 27 gehaltene Statorwicklung 28 ist dargestellt, während in Fig.6 ein Abstützelement 29 für die Polwicklung 15 und die Leiter 30, 31 der Dämpferwicklung zu erkennen sind.

Eine besonders einfach Befestigung der Dichtplatten wird erreicht, wenn wie im Beispielsfall die letzten drei Polbleche eine dem Bolzendurchmesser entsprechende kreisrunde Bohrung zur Aufnahme des Bolzenschafts aufweisen und im nächstinneren Polblech eine der Aussenkontur des Bolzenkopfs entsprechende beispielsweise sechseckige Ausnehmung vorgesehen ist, die als Verdrehsicherung für den Bolzen dient. Die Bolzen 25 werden vor dem Schichten der drei letzten Bleche in die Ausnehmung eingelegt, und die drei letzten Bleche darüber geschoben. Diese Art der Anbringung ist - weil unabhängig von den Spann- und Abstützmitteln des Pols - sehr wirtschaftlich und einfach. Auch lassen sich die Dichtplatten im Reparaturfall leicht auswechseln.

Wie am besten aus Fig.6 zu erkennen ist, ragt die Dichtplatte 24 in den Maschinenluftspalt 17 bis nahe an die Statorbohrung unter Belassung eines gegenüber dem Maschinenluftspalt 17 kleinen Spaltes 32 heran. Falls erforderlich, kann die Nutkeilsicherung - meist eine kunstharz imprägnierte Glaskordel 33 (Fig.6) - zusätzlich zur Verminderung des Spaltes 32 herangezogen werden.

In Umfangsrichtung erstrecken sich die Dichtplatten - abgesehen von kleinen Spalten 34 zwischen benachbarten Dichtspalten 24 dicht an dicht und bilden auf diese Weise eine Ringdichtung, welche auf beiden Stirnseiten des Rotors den Maschinenluftspalt 17 vom Wickelkopfraum trennt.

Eine noch weitergehende Abschottung des Maschineninneren gegenüber dem Wickelkopfraum erreicht man, wenn zusätzlich die Pollücken 16 stirnseitig nach aussen hin durch eine Pollückenabschlussplatte 35 gemäss Fig.5, die eine vergrösserte Draufsicht auf das in Fig.3 durch strichlierte Linien begrenzten und mit A bezeichneten Ausschnitt darstellt, abgedeckt werden. Diese Platte 35 besteht vorzugsweise aus einer Alumnium-Legierung oder aus glasfaserverstärktem Kunststoff und ist radial innen mit einer runden Erweiterung 36 versehen und mit dieser in einer axial verlaufenden Rundbohrung 37 im Rotorkranz 7 gehalten. Radial aussen ist sie an den Dichtplatten lösbar befestigt. Die Pollückenabschlussplatte 35 ist vorzugsweise mit einem Verdrängungskörper 38 in der Pollücke 16 kombiniert. Derartige Verdrängungskörper sind bei elektrischen Maschinen mit ausgeprägten Polen an sich bekannt. Sie erstrecken sich über die gesamte axiale Länge der Pollücke 16 und haben die Aufgabe, den Raum zwischen benachbarten Polspulen 15 so auszufüllen, dass die Kühlluft möglich dicht und mit grosser Geschwindigkeit an den Polspulen 15 vorbeiströmt.

Diese Kombination von Pollückenabschluss 35 und Verdrängungskörper 38 umfasst einen Hohlkörper, der radial innen offen ist und an beiden Stirnseiten an jeder Pollückenabschlussplatte 35 befestigt ist. Sie wird vor der Montage der Dichtplatten 24 eingeschoben und dann zusammen mit diesen montiert.

Mit der Erfindung kann eine vollig neue Kühlluftführung für vertikalachsige Wasserkraftmaschinen erreicht werden:
Die (frische) Kühlluft gelangt durch Oeffnungen in den Deckringen 5, 6 im Nabenbreich in die Rotortragkonstruktion und von dort radial nach aussen zum Rotorkranz 7, strömt durch die Kühlschlitze 9 im Rotorkranz 7, anschliessend durch die Pollücken 16 in den Maschinenluftspalt 17 und dann durch die radialen Kühlschlitze 19 im Statorblechkörper 18. Die nunmehr stark erhitzte Luft wird in den Luft-Wasserkühlern 23 abgekühlt und kehrt nach Umlenkung durch die Räume 39 und 40 oberhalb und unterhalb der Maschine zurück zur Maschinenmitte. Auf diesem Weg passiert die kalte Luft die Wickelköpfe 41, 42 der Statorwicklung 28 und auch die Wicklungsverbindungen und Ableitungen 43 und kühlt diese kritischen Teile intensiv.

Die zur Schaffung des erfindungsgemässen Kühlkonzepts notwendigen Bauteile sind weit weniger voluminös als die herkömmlichen Abdeckungen. Die notwenigen "Dichtelemente" haben einfache Formen, die wirtschaftlich herzustellen sind. Ihre Befestigung am Rotor gestaltet sich durch den Einsatz sogenannter endplattenlosen Rotorpole einfach.

### BEZEICHNUNGSLISTE

- 1: Fundamentboden
- 2: Fundamentwände
- 3: Rotornabe
- 4: Schrägspeichen
- 5: oberer Deckring
- 6: unterer Deckring
- 7: Rotorkranz
- 8: Blechsegmente von 7
- 9: radiale Kühlschlitze in 7
- 10: Leisten
- 11: Keile
- 12: axiale Nuten in 7
- 13: Polklauen von 14
- 14: Rotorpole
- 15: Polwicklung
- 16: Pollücken
- 17: Maschinenluftspalt
- 18: Statorblechkörper
- 19: radiale Kühlschlitze in 18
- 20: Statortragkonstruktion
- 21: Lagertragstern
- 22: Abdeckung
- 23: Luft-Wasserkühler
- 24: Dichtplatten
- 25: Stehbolzen
- 26: Bolzen
- 27: Nutkeile
- 28: Statorwicklung
- 29: Abstützlelement für 15
- 30,31: Dämpferwicklunq
- 32: Dichtspalt
- 33: imprägnierte Glaskordel
- 34: Spalte zwischen benachbarten Dichtplatten
- 35: Pollückenabschlussplatte
- 36: Verdickung an 35
- 37: axiale Bohrung in 7
- 38: Verdrängungskörper
- 39,40: Rückströmräume
- 41,42: Statorwickelköpfe
- 43: Ableitungen

## Patentansprüche

1. Vertikalachsige elektrische Wasserkraftmaschine mit einem mit einer Nabe (3) versehenen Rotorstern, an welchem am Aussenumfang ein Rotorkranz (7) angeordnet ist, der aus Polblechen geschichtete Rotorpole (14) und eine Polwicklung (15) trägt, einem den Rotor umgebenden und vom diesem durch einen Luftspalt (17) getrennten Stator, der einen aus Blechen geschichteten Statorblechkörper (18) mit Nuten am Innenumfang zur Aufnahme einer Statorwicklung (28) aufweist, welche Statorwicklung an beiden Blechkörperstirnseiten Statorwickelköpfe (41,42) und Wicklungsverbindungen aufweist, wobei sowohl Rotorkranz (7) als auch Statorblechkörper (18) radial verlaufende Kühlschlitze (9,19) aufweist, durch welche Kühlluft von der Nabe (3) durch besagte Schlitze (9) im Rotorkranz, die Distanzen (16) zwischen den Polen (14), den Luftspalt (17) und die Schlitze (19) im Statorblechkörper (18) in einen diesen umgebenden mit Kühlern (23) ausgestatteten Ringraum und von dort aus wieder zur Nabe (3) führbar ist, wobei als Förder- und Druckerzeugungsmittel für die Kühlluft der Rotor selbt wirkt, dadurch gekennzeichnet, dass die Rotorpole (14) an beiden Stirnseiten Dichtplatten (24) aus nichtmagnetischem Material aufweisen, die in den Maschinenluftspalt (17) bis nahe an die Statorbohrung heranreichen und in Umfangsrichtung gesehen dicht an dicht angeordnet und auf diese Weise eine Ringdichtung bilden, welche den Maschinenluftspalt (17) vom Wickelkopfraum (39,40) trennt.

2. Maschine nach Anspruch 1, dadurch gekennzeichnet, dass dass die Dichtplatten (24) unmittelbar auf den äusseren Blechen des Rotorpols (14) befestigt sind.

3. Maschine nach Anspruch 2, dadurch gekennzeichnet, dass die Dichtplatten mittels Stehbolzen (25) befestigt sind, die im Inneren des Rotorpols (14) verdrehsicher gehalten sind.

4. Maschine nach einem der Ansprüche 1 bis 3, dadurch gekennzeichnet, dass in der Pollücke (16) zwischen zwei benachbarten Rotorpolen (14) stirnseitig eine Pollückenabschlussplatte (35) angeordnet ist.

5. Maschine nach Anspruch 4, dadurch gekennzeichnet, dass die Pollückenabschlussplatte (35) radial aussen an den Dichtplatten (24), radial innen am Rotorkranz (7) befestigt ist.

6. Maschine nach Anspruch 5, dadurch gekennzeichnet, dass im Bereich der Pollücke (16) im Rotorkranz (7) eine zylindrische Bohrung (37) vorgesehen ist, in welcher die Pollückenabschlussplatte (35) befestigt ist.

7. Maschine nach einem der Ansprüche 4 bis 6, dadurch gekennzeichnet, dass in der Pollücke (16) ein Verdrängungskörper (38) angeordnet ist, der sich über die gesamte axiale Länge der Pollücke erstreckt und an stirnseitig an den Pollückenabschlussplatten (35) befestigt ist.
